Europäisches Patentamt

**European Patent Office**

Office européen des brevets

(11) Numéro de publication: **0 026 131**
**B1** ·

(12) **FASCICULE DE BREVET EUROPEEN**

(12)

(19)

(45) Date de publication du fascicule du brevet:
08.06.83

(21) Numéro de dépôt: **80401304.3**

(22) Date de dépôt: **11.09.80**

(51) Int. Cl.³: **B 60 G 13/00,** F 16 F 9/54,
B 60 G 11/16

(54) *Suspension à jambe télescopique oscillante pour roue de véhicule.*

(30) Priorité: **20.09.79 FR 7923410**

(43) Date de publication de la demande:
**01.04.81 Bulletin 81/13** ·

(45) Mention de la délivrance du brevet:
**08.06.83 Bulletin 83/23**

(84) Etats contractants désignés:
**DE GB IT**

(56) Documents cités:
**BE-A-627 726**
**DE-A-2 063 448**
**DE-B-1 123 219**
**FR-A-1 112 516**
**FR-A-1 293 578**
**FR-A-2 287 355**
**FR-A-2 364 777**
**FR-A-2 374 566**
**FR-A-2 398 628**
**US-A-2 197 163**

**Le dossier contient des informations techniques
présentées postérieurement au dépôt de la demande et
ne figurant pas dans le présent fascicule.**

(73) Titulaire: **SOCIETE ANONYME AUTOMOBILES
CITROEN, 117 à 167, Quai André Citroen, F-75747 Paris
Cedex 15 (FR)**
Titulaire: **AUTOMOBILES PEUGEOT, 75, avenue de la
Grande Armée, F-75116 Paris (FR)**

(72) Inventeur: **Roche, Alain Gilbert, 30, rue de la Saussaye,
F-91300 Massy (FR)**

(74) Mandataire: **Fabien, Henri et al, PEUGEOT SA. DAT /
BPI 18, rue des Fauvelles, F-92250 La
Garenne-Colombes (FR)**

ACTORUM AG

## Suspension à jambe télescopique oscillante pour roue de véhicule

L'invention est relative aux suspensions pour roue de véhicule qui comprennent une jambe télescopique dont l'élément coulissant inférieur porte la roue et est lié par une articulation inférieure à un bras sensiblement horizontal articulé sur la structure du véhicule, et dont l'élément de coulisse supérieur est lié à cette structure par une articulation supérieure.

Pour autoriser non seulement de légères oscillations angulaires de la jambe télescopique lors des débattements verticaux de la roue par rapport à la structure, mais aussi, dans le cas d'une roue directrice, le pivotement de celle-ci autour de l'axe passant par le centre des articulations inférieure et supérieure lors des manœuvres de braquage, ces articulations sont généralement réalisées sphériques et/ou à manchon souple.

Dans les suspensions en question, et plus particulièrement celles comportant un transmetteur d'effort axial, tel qu'un ressort, interposé entre les deux éléments coulissants de sorte qu'une partie de la charge du véhicule est transmise de la structure à la jambe télescopique par l'articulation supérieure, celle-ci comprend avantageusement, d'une part, une bague d'appui inférieur, solidaire de l'élément de coulisse supérieur, coopérant avec un siège souple et/ou sphérique fixé dans une ouverture de la structure, d'autre part, un moyen de retenue supérieure généralement composé d'une coupelle, solidaire de l'élément de coulisse supérieur, coopérant ou propre à coopérer avec le bord de ladite ouverture, avec ou sans interposition d'une pièce annulaire souple.

Dans une telle disposition, connue notamment par le brevet FR-A N° 2287355, un jeu axial peut être prévu entre la coupelle et le bord de l'ouverture pour permettre de notables oscillations angulaires de la jambe télescopique autour du centre de l'articulation supérieure, mais un tel jeu peut engendrer des bruits ou des chocs nuisibles à l'endurance lors des contre-débattements importants de la roue; ou bien ce jeu axial est empêché par l'interposition susmentionnée d'une pièce annulaire souple, mais celle-ci limite lesdites oscillations angulaires, car elle se trouve quelque peu écartée axialement du centre de l'articulation supérieure défini par les moyens d'appui inférieur.

Par ailleurs, le brevet FR-A N° 1112516 suggère de réaliser, pour un dispositif télescopique de suspension, une articulation où les moyens d'appui sont constitués par un couteau, avec platine coopérant avec un tampon de caoutchouc, de manière à autoriser des oscillations angulaires prépondérantes dans une direction; les moyens de retenue comprennent une rondelle torique en caoutchouc logée dans une pièce tronconique. Une telle disposition ne pourrait convenir pour l'articulation supérieure d'une jambe télescopique, car elle consisterait à transmettre les efforts axiaux importants dus à la charge du véhicule par ledit couteau; or celui-ci ne présente une surface d'appui que de faible surface, au voisinage d'une ligne diamétrale perpendiculaire à l'axe de coulissement du dispositif et, par suite, l'endurance des moyens d'appui risquerait d'être insuffisante, ou leur dimension devrait être excessive.

L'invention a pour but de réaliser une suspension du type susmentionné à jambe télescopique, avec une articulation supérieure qui autorise des oscillations angulaires prépondérantes de l'axe de la jambe dans ou au voisinage d'un plan déterminé, ce plan étant notamment celui contenant le centre de l'articulation supérieure et l'arc parcouru par le centre de l'articulation inférieure, soit le plan contenant l'axe de coulissement de la jambe et le centre de l'articulation inférieure quand ce centre est écarté de cet axe, et détermine avec le centre de l'articulation supérieure un axe de pivotement pour la roue, alors directrice.

L'invention vise également à assurer l'arrêt en rotation de l'élément de coulisse supérieur autour de l'axe de coulissement, en particulier lorsqu'il porte des organes de suspension oléopneumatique qui sont déportés par rapport audit axe et qui doivent être au moins approximativement immobiles par rapport à la structure, notamment lors des pivotements de la roue si elle est directrice.

Selon l'invention, une suspension du genre indiqué ci-dessus est caractérisée par le fait que l'une des pièces, coupelle ou anneau, composant le moyen de retenue supérieure est formée avec une paire de proéminences disposées de part et d'autre de l'axe de coulissement de manière à assurer le contact entre coupelle et anneau sensiblement suivant une ligne diamétrale sensiblement perpendiculaire audit plan déterminé dans lequel ou au voisinage duquel l'axe de la jambe télescopique effectue ses oscillations prépondérantes.

Par ailleurs, pour assurer l'arrêt en rotation de l'élément de coulisse supérieur, l'invention prévoit l'aménagement, dans l'autre pièce de retenue supérieure que celle conformée avec une paire de proéminences, d'au moins un évidement dont les bords coopèrent ou sont propres à coopérer avec l'une des proéminences, la coupelle étant, de plus, immobilisée axialement et en rotation sur l'élément de coulisse supérieur.

Il est donné ci-après description de plusieurs modes de réalisation de l'invention, avec référence aux dessins annexés:

la fig. 1 est une vue schématique en coupe transversale partielle d'une suspension de roue selon l'invention;

la fig. 2 est, à plus grande échelle, une vue semblable à la fig. 1 d'une variante de réalisation;

la fig. 3 montre, de manière détaillée et agrandie, une partie de la fig. 2;

la fig. 4 est une vue de gauche de la fig. 3, qui en est une coupe suivant III, et

la fig. 5 est une vue de dessus de la fig. 4.

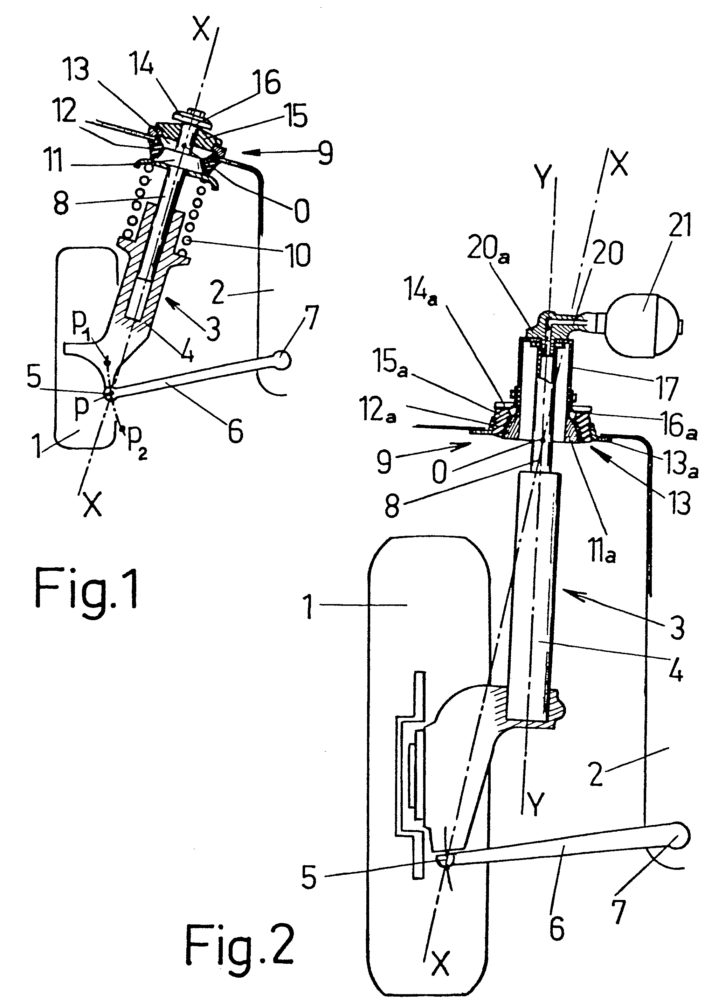

Selon la représentation schématique de la fig. 1, qui montre une suspension pour roue 1 reliée à la structure 2 d'un véhicule par une jambe télescopique 3 comprenant, d'une part, un élément coulissant inférieur 4 portant la roue et lié par une articulation inférieure 5 à un bras 6 sensiblement horizontal articulé en 7 sur la structure 2 et, d'autre part, un élément de coulisse supérieur 8 lié à cette structure par une articulation supérieure 9, on voit que, lors des débattements verticaux de la roue par rapport à la structure, l'axe XX de la jambe télescopique subit des oscillations angulaires autour du centre O de l'articulation supérieure du fait du déplacement suivant un arc de cercle $P_1$, $P_2$ du centre P de l'articulation inférieure.

De manière connue, un ressort 10 est interposé entre les deux éléments coulissants de manière à exercer sur eux un effort axial tendant à les écarter à l'encontre d'une partie de la charge du véhicule, transmise à la jambe télescopique par l'articulation supérieure 9, laquelle comporte, d'une part, des moyens d'appui inférieur constitués par une bague 11, solidaire de l'élément de coulisse 8, coopérant avec un siège souple 12 en forme de manchon fixé dans une ouverture 13 de la structure 2 et, d'autre part, des moyens de retenue supérieure propres à maintenir axialement l'élément 8, engagé à travers l'ouverture 13 et le siège 12, ces moyens consistant en une coupelle 14 axialement solidaire de l'élément 8 et coopérant avec un anneau 15 en appui élastique sur les bords de l'ouverture 13; l'élasticité de cet appui est obtenue soit par interposition d'une pièce annulaire souple — telle que la portion supérieure du manchon 12, selon la fig. 1 — entre l'anneau 15 et les bords de l'ouverture, soit par utilisation d'un matériau légèrement souple pour constituer l'anneau 15.

Selon l'invention, la face supérieure de l'anneau 15 présente une convexité telle qu'elle procure une zone de contact 16 avec la coupelle 14 de part et d'autre de l'axe XX, au voisinage d'une ligne diamétrale perpendiculaire à cet axe et au plan contenant le centre O et l'arc $P_1$, $P_2$. Il s'ensuit que les oscillations angulaires susmentionnées de la jambe télescopique sont autorisées, avec léger glissement de la coupelle 14 sur la zone proéminente 16 de l'anneau 15 et/ou faible déformation élastique de ce dernier à proximité de la zone de contact.

La fig. 2 représente un autre mode de réalisation concernant la suspension hydropneumatique d'une roue directrice 1 portée par l'élément inférieur 4 d'une jambe télescopique 3 reliée à un bras inférieur 6 par une articulation inférieure 5 qui est ici notablement écartée de l'axe YY de coulissement. Par suite, lors des braquages de la roue pivotant autour de l'axe XX passant par O et le centre de l'articulation 5, la ligne YY décrit une portion de cône centré en O et d'axe XX: les oscillations de cet axe de coulissement YY autour du centre O doivent donc être prédominantes dans le plan, sensiblement longitudinal, passant par cet axe et approximativement perpendiculaire à celui contenant le centre 5 et la ligne YY. A cet effet, l'articulation supérieure 9 comporte des moyens d'appui inférieur et de retenue supérieure analogues à ceux schématiquement décrits à la fig. 1 mais, ici, la zone diamétrale de contact 16a entre coupelle 14a et anneau 15a est au voisinage dudit plan contenant l'axe YY et le centre de l'articulation 5.

Dans le cas, non représenté, où le bras inférieur 6 est articulé sur la structure du véhicule de manière que, lors des débattements verticaux de la roue 1, le centre de l'articulation 5 ait un débattement incliné vers le haut et vers l'avant pour assurer un effet d'anticabrage à l'accélération et d'antiplongée au freinage, les oscillations angulaires de la jambe télescopique 3 peuvent être prépondérantes dans un plan déterminé, par exemple légèrement incliné par rapport à la direction longitudinale du véhicule; la ligne diamétrale de contact 16a est alors de préférence prévue sensiblement perpendiculaire à ce plan.

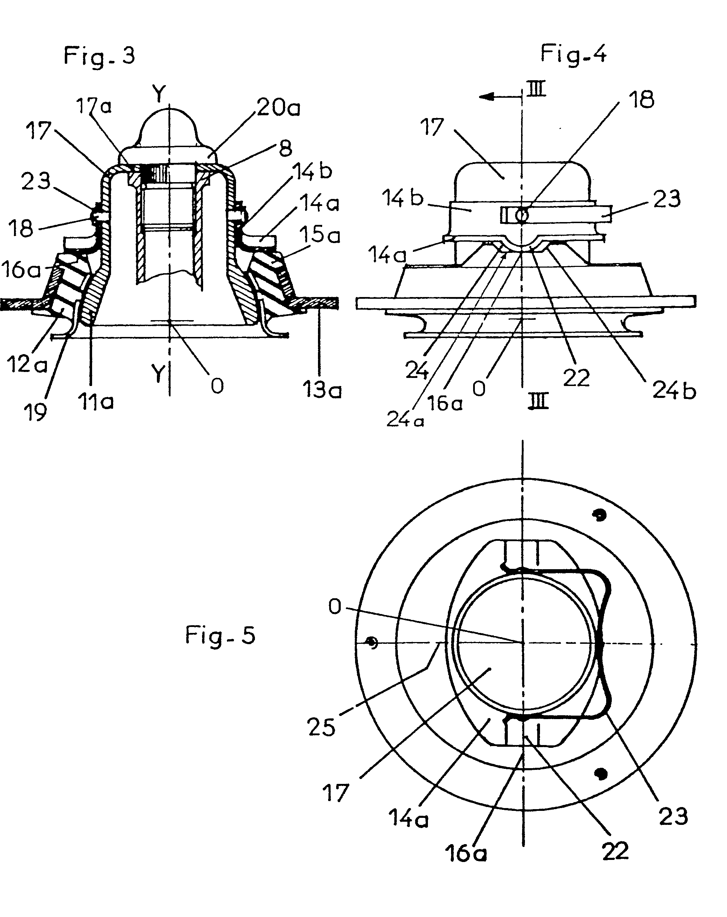

Plus précisément, comme visible sur les fig. 2 à 5, les moyens d'appui inférieur et de retenue supérieure sont respectivement constitués par une bague sphérique 11a coopérant avec un siège 19 adhérant à un manchon en élastomère 12a maintenu dans le contour 13a de l'ouverture 13 et par une coupelle 14a coopérant avec un anneau 15a réalisé d'une seule pièce avec le manchon 12a. La bague 11a et la coupelle 14a sont solidaires de l'élément de coulisse supérieur 8 par l'intermédiaire d'une douille 17, dont le fond 17a est serré par vissage entre l'extrémité supérieure de l'élément 8 et l'embase 20a d'un conduit 20 reliant un ressort pneumatique 21 à une chambre contenue dans la jambe télescopique, dont l'élément de coulisse 8 constitue une partie d'un vérin hydraulique transmettant l'effort axial dû à la charge portée par la roue. La bague 11a est ici réalisée d'une seule pièce avec la douille 17, dont elle forme l'extrémité inférieure, et la coupelle 14a est immobilisée sur la douille 17 par deux goupilles 18 traversant des trous coaxiaux juxtaposés, perpendiculaires à l'axe YY, percés respectivement dans la douille 17 et dans des rebords 14b de la coupelle. Les deux goupilles sont maintenues en place par une pince élastique 23 qui exerce sur elles une poussée radiale centripète en entourant partiellement la douille 17.

Pour réaliser la zone diamétrale de contact 16a, la coupelle 14a comporte, de part et d'autre de la douille 17, deux proéminences 22 tournées vers le bas et en appui contre le fond 24a d'évidements 24 formés sur la face supérieure de l'anneau 15a. Les bords 24b de chaque évidement sont proches de la proéminence 22 correspondante dont ils constituent des butées limitant la rotation, autour de l'axe YY, de la coupelle 14a et de la douille 17 et, par suite, de l'élément 8 et des organes hydrauliques qui en sont solidaires: en particulier, dans le cas de la fig. 2 où le ressort pneumatique 21 est rigidement fixé au conduit 20, lui-même monobloc avec con embase 20a, le ressort 21 est également arrêté en rotation, ce qui permet sa disposition radialement décalée de l'axe YY, et donc de faible hauteur, dans un espace restreint, sans nécessiter de raccord tournant ou souple pour sa jonction avec le vérin de la jambe télescopique.

Parmi les avantages procurés par les systèmes de suspension proposés, on peut noter que l'écartement notable qu'elle autorise entre l'axe de coulissement YY et l'articulation 5 permet de disposer celle-ci à l'intérieur de la roue, au voisinage de son plan moyen et, par suite, de rapprocher l'axe de pivotement XX du centre de la roue, de manière à réduire les influences néfastes des efforts longitudinaux appliqués à la roue sur les mécanismes de suspension et de direction du véhicule. De plus, un rappel de direction vers la position de ligne droite est assuré par compression élastique d'au moins une des pièces de retenue supérieure — proéminence et évidement de la coupelle ou de l'anneau — car, lors d'un braquage de la roue, la ligne YY décrivant une portion de cône de centre O et d'axe XX de pivotement de la roue, l'axe de coulissement, donc la douille 17 et la coupelle 14, oscille principalement autour de la ligne diamétrale 16a de contact, mais aussi très légèrement autour du diamètre 25 perpendiculaire à 16a, provoquant un léger écrasement du matériau élastique au droit de la zone de contact d'un des côtés de l'axe YY.

## Revendications

1. Suspension pour roue de véhicule, comprenant une jambe télescopique (3) dont l'élément coulissant inférieur (4) porte la roue (1) et est lié par une articulation inférieure (5) à un bras (6) sensiblement horizontal articulé sur la structure du véhicule, et dont l'élément de coulisse supérieur (8) est lié à cette structure par une articulation supérieure (9) permettant de légères oscillations angulaires de l'axe de la jambe télescopique et comportant une bague (11) d'appui inférieur et une coupelle (14) de retenue supérieure qui sont axialement solidaires de l'élément de coulisse supérieur et qui coopèrent respectivement avec un siège (12) souple et/ou sphérique et avec un anneau (15) maintenus de part et d'autre d'une ouverture de ladite structure, suspension caractérisée en ce que le bras inférieur (6) étant articulé sur la structure de manière que les oscillations angulaires de l'axe de coulissement (XX, fig. 1) de la jambe télescopique soient prépondérantes dans un plan déterminé contenant le centre (O) de l'articulation supérieure (9) et l'arc (P$_1$, P$_2$) parcouru par le centre (5) de l'articulation inférieure, l'une des pièces de retenue supérieure, coupelle (14) ou anneau (15), est formée avec une paire de proéminences (16) qui sont disposées de part et d'autre dudit axe de coulissement et qui assurent le contact entre coupelle et anneau au voisinage d'une ligne diamétrale (16) sensiblement perpendiculaire audit plan déterminé.

2. Suspension pour roue de véhicule, comprenant une jambe télescopique (3) dont l'élément coulissant inférieur (4) porte la roue (1) et est lié par une articulation inférieure (5) à un bras (6) sensiblement horizontal articulé sur la structure du véhicule, et dont l'élément de coulisse supérieur (8) est lié à cette structure par une articulation supérieure (9) permettant de légères oscillations angulaires de l'axe de la jambe télescopique et comportant une bague (11a) d'appui inférieur et une coupelle (14a) de retenue supérieure qui sont axialement solidaires de l'élément de coulisse supérieur et qui coopèrent respectivement avec un siège (12a) souple et/ou sphérique et avec un anneau (15a) maintenus de part et d'autre d'une ouverture de ladite structure, suspension caractérisée en ce que, la roue pouvant pivoter autour de l'axe (XX, fig. 2) passant par les centres (0 et 5) des articulations supérieure et inférieure, et le centre (5) de l'articulation inférieure étant écarté de l'axe (YY) de coulissement de la jambe télescopique, l'une des pièces de retenue supérieure, coupelle (14a) ou anneau (15a), est formée avec une paire de proéminences (22) qui sont disposées de part et d'autre dudit axe de coulissement et qui assurent le contact entre coupelle et anneau au voisinage d'une ligne diamétrale située dans le plan ou au voisinage du plan contenant l'axe (YY) de coulissement et le centre (5) de l'articulation inférieure.

3. Suspension selon l'une des revendications 1 ou 2, dans laquelle l'arc (P$_1$, P$_2$) parcouru par le centre (5) de l'articulation inférieure est incliné vers le haut et vers l'avant du véhicule, caractérisée en ce que ladite ligne diamétrale de contact (16, 16a) est sensiblement perpendiculaire à un plan légèrement incliné par rapport à la direction longitudinale du véhicule.

4. Suspension selon la revendication 2, caractérisée en ce que l'autre pièce de retenue supérieure, anneau (15a) ou coupelle (14a), que celle formée avec une paire de proéminences (22) comporte, dans la zone de la ligne diamétrale de contact (16a), au moins un évidement (24) dont les bords (24b) coopèrent ou sont susceptibles de coopérer avec l'une des proéminences, de manière à assurer l'arrêt en rotation de la coupelle.

5. Suspension selon la revendication 4, caractérisée en ce que la coupelle (14a) est rendue solidaire de l'élément de coulisse supérieur (8) par un moyen de fixation (18) assurant l'immobilisation non seulement axiale, mais aussi en rotation, de sorte que la coopération d'au moins une proéminence (22) avec les bords (24b) d'un évidement assure l'arrêt en rotation de l'élément de coulisse supérieur.

6. Suspension selon la revendication 5, caractérisée en ce que ledit moyen de fixation consiste en au moins une goupille cylindrique (18) engagée dans deux trous coaxiaux juxtaposés formés respectivement dans la coupelle (14a) et dans l'élément de coulisse supérieur (8) ou une pièce (17) qui en est solidaire, l'axe des trous étant perpendiculaire à l'axe de coulissement (YY) et la goupille étant maintenue engagée dans ces trous par une pièce élastique, telle qu'une pince (23) en lame de ressort entourant au moins partiellement l'élément de coulisse (8), ou la pièce solidaire (17).

7. Suspension selon l'une des revendications 5 ou 6, caractérisée en ce que, la jambe télescopique contenant un vérin relié hydrauliquement à un ressort pneumatique (21), celui-ci est radialement décalé de l'axe YY de coulissement et fixé à l'élément de coulisse supérieur (8), de sorte qu'il est également arrêté en rotation par coopération d'au moins une des proéminences (22) avec les bords (24b) de l'évidement correspondant.

8. Suspension selon l'une quelconque des revendications précédentes, caractérisée en ce que, la bague (11a) d'appui inférieur coopérant avec un siège qui comprend un manchon souple (12a) en matériau élastomère, ce manchon est réalisé d'une seule pièce avec l'anneau d'appui supérieur (15a) formé avec la paire de proéminences (16) ou au moins un évidement (24).

## Claims

1. Suspension for the wheel of a vehicle, comprising a telescopic leg (3) of which the lower sliding element (4) carries the wheel (1) and is linked by a lower articulation (5) to a substantially horizontal arm (6) articulated to the structure of the vehicle, and of which the upper sliding element (8) is linked to this structure by an upper articulation (9) permitting slight angular oscillations of the axis of the telescopic leg and comprising a lower support ring (11) and an upper retaining cup (14) which are axially solid with the upper sliding element and which cooperate respectively with a flexible and/or spherical seating (12) and with a ring (15) maintained on either side of an opening of the said structure, characterised in that the lower arm (6) is articulated to the structure in such a manner that the angular oscillations of the sliding axis (XX, fig. 1) of the telescopic leg are preponderantly in a determined plane containing the centre (O) of the upper articulation (9) and the arc $(P_1, P_2)$ traversed by the centre (5) of the lower articulation, the one of the upper retaining parts, cup (14) or ring (15), is formed with a pair of projections (16) which are disposed on either side of the said sliding axis and which assure contact between the cup and the ring in the vicinity of the diametral line (16) substantially perpendicular to the said determined plane.

2. Suspension for the wheel of a vehicle, comprising a telescopic leg (3) of which the lower sliding element (4) carries the wheel (1) and is linked by a lower articulation (5) to a substantially horizontal arm (6) articulated to the structure of the vehicle, and of which the upper sliding element (8) is linked to this structure by an upper articulation (9) permitting slight angular oscillations of the axis of the telescopic leg and comprising a lower support ring (11a) and an upper retaining cup (14a) which are axially solid with the upper sliding element and which cooperate respectively with a flexible and/or spherical seat (12a) and with a ring (15a) maintained on either side of an opening of the said structure, characterised in that the wheel can pivot about an axis (XX, fig. 2) passing through the centres (O and 5) of the upper and lower articulations and, the centre (5) of the lower articulation being separated from the sliding axis (YY) of the telescopic leg, the one of the upper retaining parts, cup (14a) or ring (15), is formed with a pair of projections (22) which are disposed on either side of the said sliding axis and which ensure the contact between the cup and the ring in the vicinity of the diametral line situated in the plane or in the neighbourhood of the plane containing the sliding axis (YY) and the centre (5) of the lower articulation.

3. Suspension according to claim 1 or 2, in which the arc $(P_1, P_2)$ traversed by the centre (5) of the lower articulation is inclined towards the top and towards the front of the vehicle, characterised in that the said diametral line of contact (16, 16a) is substantially perpendicular to a plane slightly inclined with respect to the longitudinal direction of the vehicle.

4. Suspension according to claim 2, characterised in that the other upper retaining part, ring (15a) or couplin (14a), than that formed with a pair of projections (22) comprises, in the zone of the diametral line of contact (16a), at least one recess (24) of which the edges (24b) cooperate or are capable of cooperating with one of the projections in such a manner as to ensure the stopping in rotation of the coupling.

5. Suspension according to claim 4, characterised in that the coupling (14a) is made integral with the upper sliding element (8) by means of a fixing (18) which ensures the immobilisation not only in the axial direction but also in rotation, such that the cooperation of at least one projection (22) with the edges (24b) of a recess ensures the stopping in rotation of the upper sliding element.

6. Suspension according to claim 5, characterised in that the said fixing means consists of at least one cylindrical pin (18) engaged in two juxtaposed coaxial holes formed respectively in the cup (14a) and in the upper sliding element (8), or a part (17) which is solid therewith, the axis of the holes being perpendicular to the sliding axis (YY) and the pin being maintained engaged in these holes by a resilient member, such as a spring clip (23) at least partially surrounding the sliding element (8) or the integral part (17).

7. Suspension according to claim 5 or 6, characterised in that the telescopic leg containing a jack hydraulically connected to a pneumatic spring (21), the latter is radially offset from the sliding axis (YY) and fixed to the upper sliding element (8), such that it is equally stopped in rotation by cooperation of at least one of the projections (22) with the edges (24b) of the corresponding recess.

8. Suspension according to any one of the preceding claims, characterised in that, the lower support ring (11a) cooperating with a seating which comprises a flexibles sleeve (12a) of elastomeric material, this sleeve is formed as one piece with the upper support ring (15a) formed with the pair of projections (16) or at least one recess (24).

## Patentansprüche

1. Radaufhängung mit einem Teleskopbein(3), dessen unteres verschiebbares Element (4) das Rad (1) trägt und durch ein unteres Gelenk (5) mit einem im wesentlichen waagerechten am Aufbau des Fahrzeugs angelenkten Arm (6) verbunden ist und dessen oberes Schiebeelement (8) mit dem Aufbau durch ein oberes Gelenk (9) verbunden ist, das geringe Winkelauslenkungen der Achse des Teleskopbeins ermöglicht und einen unteren Anlagering (11) sowie einen oberen Halteteller (14) aufweist, die mit dem oberen Schiebeelement axial fest verbunden sind und jeweils mit einem nachgiebigen und/oder kugelförmigen Sitz (12) und einem Ring (15) zusammenarbeiten, die beiderseits eine Öffnung des Aufbaus gehalten sind, dadurch gekennzeichnet, dass der untere Arm (6) am Aufbau derart angelenkt ist, dass die Winkelauslenkungen der Verschiebungsachse (XX, Fig. 1) des Teleskopbeins in einer festgelegten Ebene überwiegen, die die Mitte (O) des oberen Gelenks (9) und den von der Mitte (5) des untenren Gelenks durchlaufenden Bogen (P₁, P₂) enthält, und dass eines der oberen Halteteile — der Teller (14) oder der Ring (15) — mit einem Paar von Vorsprüngen (16) versehen ist, die sich beiderseits der Verschiebungsachse befinden und die Berührung zwischen dem Teller und dem Ring in der Nähe einer diagonalen Linie (16) gewährleisten, die zur festgelegten Ebene im wesentlichen senkrecht ist.

2. Fahrzeugradaufhängung mir einem Teleskopbein (3), dessen unteres verschiebbares Element (4) das Rad (1) trägt und durch ein unteres Gelenk (5) mit einem im wesentlichen waagerechten, am Aufbau des Fahrzeugs angelenktem Arm (6) verbunden ist und dessen oberes Schiebeelement (8) mit dem Aufbau durch ein oberes Gelenk (9) verbunden ist, das geringe Winkelauslenkungen der Achse des Teleskopbeins ermöglicht und einen unteren Anlagering (11a) sowie einen oberen Halteteller (14a) aufweist, die mit dem oberen Schiebeelement axial verbunden sind und jeweils mit einem nachgiebigen und/oder kugelförmigen Sitz (12a) und einem Ring (15a) zusammenarbeiten, die beiderseits einer Öffnung des Aufbaus gehalten sind, dadurch gekennzeichnet, dass sich das Rad um die Achse (XX, Fig. 2) drehen kann, die durch die Mitten (O und 5) der oberen und unteren Gelenke verläuft, dass die Mitte (5) des unteren Gelenks von der Verschiebungsachse (YY) des Teleskopbeins versetzt ist und dass eines der oberen Halteteile — der Teller (14a) oder der Ring (15a) — mit einem Paar von Vorsprüngen (22) versehen ist, die sich beiderseits der Verschiebungsachse befinden und die Berührung zwischen dem Teller und dem Ring in der Nähe einer diagonalen Linie gewährleisten, die sich in oder in der Nähe der Ebene befindet, die die Verschiebungsachse (YY) und die Mitte (5) des unteren Gelenks enthält.

3. Aufhängung nach einem der Ansprüche 1 oder 2, bei der der von der Mitte des unteren Gelenks durchlaufende Bogen (P₁, P₂) zur Oberseite und zur Unterseite des Fahrzeugs geneigt ist, dadurch gekennzeichnet, dass die diametrale Berührungslinie (16, 16a) im wesentlichen senkrecht zu einer Ebene ist, die gegenüber der Längsrichtung des Fahrzeugs geringfügig geneigt ist.

4. Aufhängung nach Anspruch 2, dadurch gekennzeichnet, dass das andere obere Halteelement — der Ring (15a) oder der Teller (14a) — als das mit einem Paar von Vorsprüngen (22) versehene in der Zone der diametralen Berührungslinie (16a) wenigstens eine Ausnehmung (24) enthält, deren Ränder (24b) mit einem der Vorsprünge derart zusammenarbeiten oder in der Lage sind zusammenzuarbeiten, dass die Festlegung in Drehrichtung des Tellers gewährleistet ist.

5. Aufhängung nach Anspruch 4, dadurch gekennzeichnet, dass der Teller (14a) mit einem oberen Schiebeelement (8) durch eine Befestigungseinrichtung fest verbunden ist, die die Festlegung nicht nur axial, sondern auch in Drehrichtung derart gewährleistet, dass das Zusammenarbeiten wenigstens eines Vorsprungs (22) mit den Rändern (24b) einer Ausnehmung die Festlegung in Drehrichtung des oberen Schiebeelements sicherstellt.

6. Aufhängung nach Anspruch 5, dadurch gekennzeichnet, dass die Befestigungseinrichtung aus wenigstens einem zylindrischen Stift (18) besteht, der in zwei nebeneinanderliegende koaxiale Löcher eingesetzt ist, die jeweils im Teller (14a) und im oberen Schiebeelement (8) oder einem damit fest verbundenen Teil (17) ausgebildet sind, wobei die Achse der Löcher senkrecht zur Verschiebungsachse (YY) ist und der Stift durch ein elastisches Teil, etwa eine aus einem Federblatt bestehende und das Schiebeelement (8) wenigstens teilweise umgebende Klammer, oder durch das damit festverbundene Teil (17) in diese Löcher eingesetzt gehalten ist.

7. Aufhängung nach einem der Ansprüche 5 oder 6, dadurch gekennzeichnet, dass das Teleskopbein einen Stellzylinder enthält, der mit einer pneumatischen Feder (21) hydraulisch verbunden ist, die ihrerseits gegenüber der Verschiebungsachse (YY) radial versetzt und am oberen Schiebeelement (8) derart befestigt ist, dass sie durch das Zusammenarbeiten eines der Vorsprünge (22) mit den Rändern (24b) der ensprechenden Ausnehmung ebenfalls in Drehrichtung festgehalten ist.

8. Aufhängung nach einem der vorhergehenden Ansprüche, dadurch gekennzeichnet, dass der untere Anlagering (11a) mit einem Sitz zusammenarbeitet, der eine aus elastomerem Material bestehende nachgiebige Hülse (12a) aufweist, die mit dem oberen Anlagering (15a) einstückig ausgebildet ist, der mit dem Paar von Vorsprüngen (16) oder wenigstens einer Ausnehmung (24) versehen ist.

Fig.1

Fig.2

Fig. 3

Fig. 4

Fig. 5